# NEW EUROPEAN PATENT SPECIFICATION

(11) **EP 2 218 169 B2**
(45) Date of publication and mention of the opposition decision: **08.01.2020**
(45) Mention of the grant of the patent: 25.04.2012
(21) Application number: 08844429.4
(22) Date of filing: 30.10.2008
(51) Int. Cl.: H02M 7/06, H02M 1/12

(54) **BRIDGELESS BOOST AC-DC CONVERTER**
WECHSELSTROM-GLEICHSTROM-AUFWÄRTSWANDLER OHNE BRÜCKE
CONVERTISSEUR CA/CC ELEVATEUR DE TENSION SANS PONT

(30) Priority: 31.10.2007 US 983939 P; 31.10.2007 GB 0721420
(43) Date of publication of application: 18.08.2010
(73) Proprietor: Eltek Valere AS, 3003 Drammen (NO)
(72) Inventor: MYHRE, Erik, N-1385 Asker (NO); BRASTAD, Jan, Tore, N-3015 Drammen (NO); GJERDE, Knut-Ivar, N-3032 Drammen (NO)
(74) Representative: Onsagers AS
(86) International application number: PCT/NO2008/000384
(87) International publication number: WO 2009/058025

(56) References cited:
- US-A- 4 626 981
- PENGJU KONG ET AL: "Common mode EMI noise suppression in bridgeless boost PFC converter" APPLIED POWER ELECTRONICS CONFERENCE, APEC 2007 - TWENTY SECOND ANNUAL IEEE, IEEE, PI, 1 February 2007 (2007-02-01), pages 929-935, XP031085322 ISBN: 978-1-4244-0713-2
- ZHONGHUI BING ET AL: "Recent Developments in Single-Phase Power Factor Correction" POWER CONVERSION CONFERENCE - NAGOYA, 2007. PCC '07, IEEE, PI, 1 April 2007 (2007-04-01), pages 1520-1526, XP031178665 ISBN: 978-1-4244-0843-6
- LASZLO HUBER ET AL: "Performance Evaluation of Bridgeless PFC Boost Rectifiers" APPLIED POWER ELECTRONICS CONFERENCE, APEC 2007 - TWENTY SECOND ANNUAL IEEE, IEEE, PI, 1 February 2007 (2007-02-01), pages 165-171, XP031085206 ISBN: 978-1-4244-0713-2 cited in the application

## Description

### FIELD OF THE INVENTION

The present invention relates to a device arranged for converting an AC input voltage to a DC output voltage.

### BACKGROUND OF THE INVENTION

Several types of converters are known for use in power supply systems, where there is a need to convert an AC power to a controlled DC power. The AC power will usually be supplied from an AC power source, such as the mains. The DC power is supplied to equipment such as telecommunication equipment, broad band data communication equipment (GSM/UMTS base stations etc), military equipment, medical equipment etc.

The requirements for the DC power can vary, but usually it is important to keep the DC voltage within certain boundaries and also to protect the DC side from irregularities in the voltage/current on the AC side.

There are known several types of bridgeless boost converters, see for example "Performance Evaluation of Bridgeless PFC Boost Rectifiers", Huber, L. et al, Applied Power Electronics Conference, 2007.

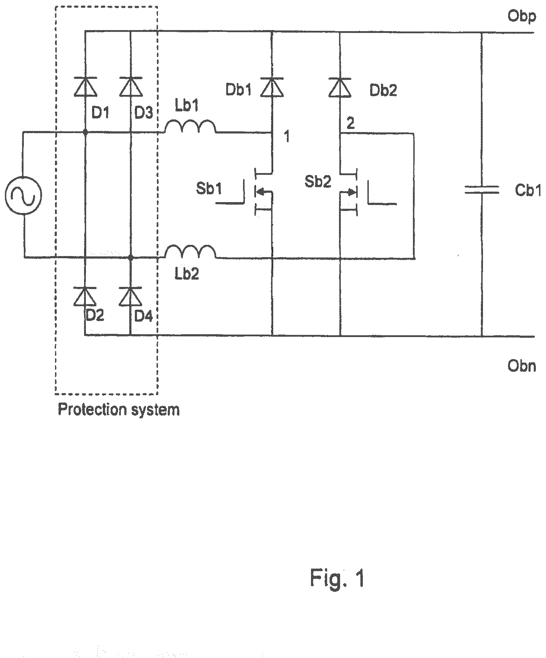

In the patent applications WO 2009028954 and WO 2009058024 in the name of Eltek Valere AS, a surge protection system is described for a bridgeless boost converter, as shown in fig. 1.

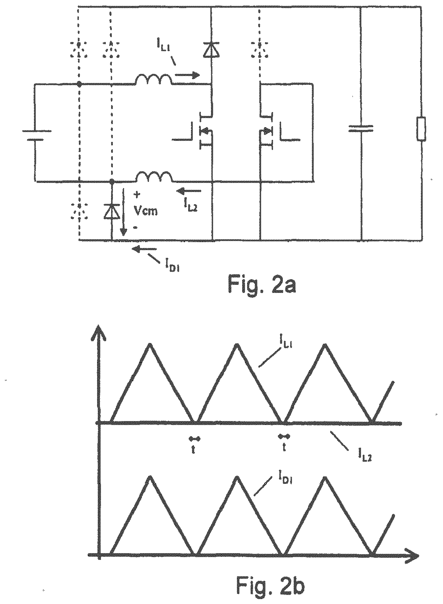

In fig. 2a the converter in fig. 1 is illustrated during a positive half cycle of the AC input voltage. Here, the diodes in dashed lines are not conducting. However, during the development and testing of the converter in fig. 1, several issues have occurred. In order to explain the principal effect and function of the circuit a constant DC input voltage is assumed in the following description. The current is flowing into the converter in inductor Lb1 and the return current through Lb2 and D4. The current is distributed between the diode D4 and the inductor Lb2 so that the entire ripple current is flowing through the diode and the remaining DC-current without any ripple is flowing in the inductor Lb2. As is shown in figure 2b, the current in the diode is bound to approach zero, and will also become zero at the end of each switching cycle. This will make the diode go into a blocking mode of operation. When the diode no longer conducts it will be able to block the common mode voltage which will appear due to the inductive voltage divider formed by Lb1 and Lb2, at the instance when the two switches Sb1 and Sb2 simultaneously switches from being non-conducting to conducting mode of operation. A short common mode (CM) voltage spike will appear over the diode, and this CM-voltage spike will cause CM-EMI disturbances and other related problems. The reason for the CM-voltage to be just a short spike is the fact that the time during which the diode is in blocking state is very short.

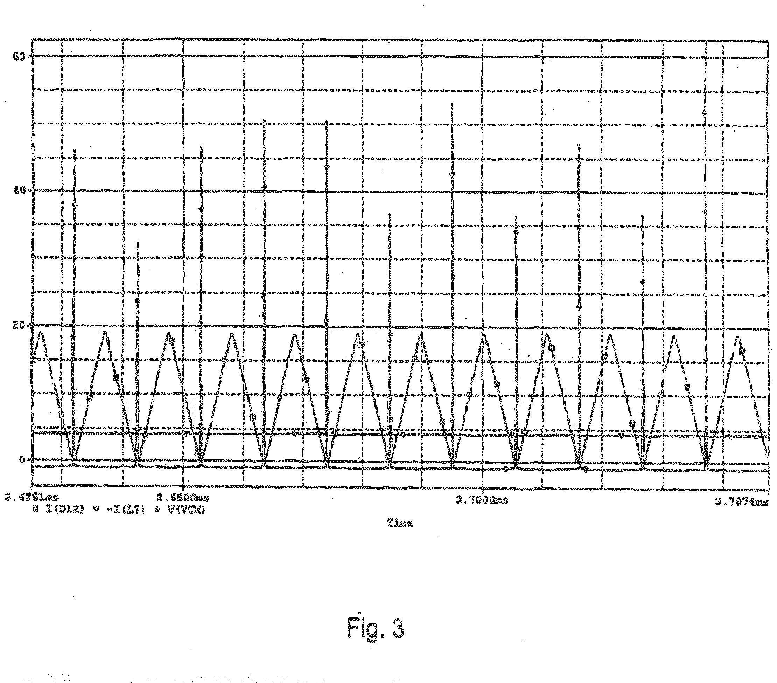

Simulations show (fig. 3) that the CM-voltage Vcm appears as spikes with a peak value of over 45 - 60V. In practical measurements, the CM-voltage Vcm has been found to be even higher.

The same problems will occur when an AC input voltage is used. As mentioned above, the voltage Vcm has been shown to cause both Electromagnetic Interference (EMI) and high frequent noise in the currents/voltages of the converter. EMI is not desirable because of the EMC requirements for such power supply systems. Moreover, the noise causes inaccurate measurements used for controlling the switches, and the power efficiency will also be reduced.

The present invention provides a device arranged for converting an AC input voltage to a DC output voltage comprising a bridgeless boost converter and protection and stabilisation system where the above disadvantages are avoided.

Due to environmental issues and also increasing energy costs, there is an increased demand for power supply systems with improved power efficiency. Therefore, the object of the invention is also to contribute to increased power efficiency for the power supply system.

### SUMMARY OF THE INVENTION

The present invention relates to a device arranged for converting an AC input voltage to a DC output voltage, comprising:
- a bridgeless boost converter; and
- a protection and stabilisation system comprising:
   - a first protection diode, where the anode is connected to a first AC input terminal and the cathode is connected to a positive boost output terminal;
   - a second protection diode, where the anode is connected to a negative boost output terminal and the cathode is connected to the first AC input terminal;
   - a third protection diode, where the anode is connected to a second AC input terminal and the cathode is connected to the positive boost output terminal; and
      The document PENGJU KONG ET AL, "Common mode EMI noise suppression in bridgeless boost PFC converter", APEC 2007, 1 February 2007, pages 929-935, describes a bridgeless AC-DC converter comprising a protection circuit. The protection circuit may include a first diode having an anode connected to a negative boost output terminal and a cathode connected to a first AC input terminal, and a second diode having an anode connected to the negative boost output terminal and a cathode connected to a second AC input terminal. Though this document discloses the use of input filter capacitors to be connected between the AC inputs and the negative boost output terminal, it does not teach the concurrent presence of such capacitors and of the protecting diodes for suppressing common mode noise. a fourth protection diode, where the anode is connected to the negative boost output terminal and the cathode is connected to the second AC input terminal;
   where at least one capacitor is connected in parallel with at least one of the protection and stabilization diodes.

In an aspect of the invention, the protection and stabilisation system comprises one capacitor in parallel with the second diode and one capacitor in parallel with the fourth diode. The capacitor in parallel with the second diode is referred to as the second capacitor and the capacitor in parallel with the fourth diode is referred to as the fourth capacitor.

In an aspect of the invention, the protection and stabilisation system comprises one capacitor in parallel with the first diode and one capacitor in parallel with the third diode. The capacitor in parallel with first diode is referred to as the first capacitor and the capacitor in parallel with the third diode is referred to as the third capacitor.

In an aspect of the invention, the bridgeless boost converter comprises:
- a boost inductor device comprising at least two boost inductors;
- a boost diode device comprising at least two boost diodes;
- a boost switch device comprising at least two boost switches; and
- a boost capacitor device comprising at least one boost capacitor.

In an aspect of the invention, the boost inductor device comprises a first boost inductor having a first end connected to the first AC input terminal and a second end connected to a first node; and a second boost inductor having a first end connected to the second AC input terminal and a second end connected to a second node.

In an aspect of the invention, the boost diode device comprises a first boost diode having an anode connected to the first node and a cathode connected to the positive boost output terminal and a second boost diode having an anode connected to the second node and cathode connected to the positive boost output terminal.

In an aspect of the invention, the boost switch device comprises a first boost switch connected between the first node and the negative output boost terminal and a second boost switch connected between the second node and the negative output boost terminal.

In an aspect of the invention, the boost capacitor device comprises a boost capacitor connected between the positive boost output terminal and the negative boost output terminal.

### DETAILED DESCRIPTION

Embodiments of the invention will now be described with reference to the enclosed drawings, where:
Fig. 1 illustrates the topology of a bridgeless boost converter with a protection and stabilization system;
Fig. 2a illustrates boost inductor currents and the voltage Vcm in the topology of fig. 1;
Fig. 2b illustrates the waveforms of the boost inductor currents and the boost diode current;
Fig. 3 shows a simulation of the voltage Vcm and the boost inductor current;
Fig. 4 illustrates the topology of an embodiment of the device according to the invention;
Fig. 5 illustrates a simulation of the voltage Vcm in the embodiment shown in fig. 4;
Fig. 6 illustrates an alternative embodiment of the invention.

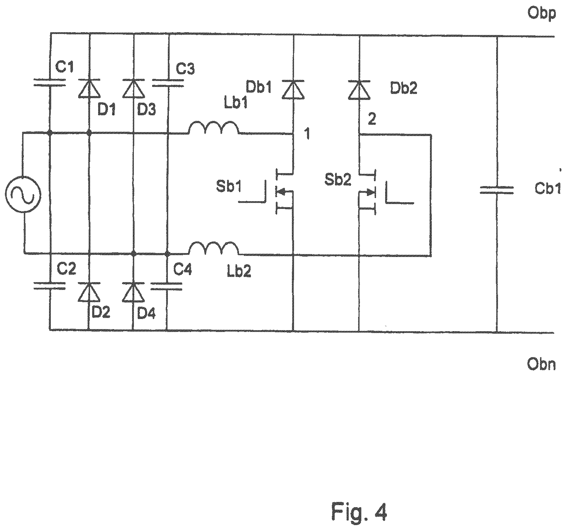

It is now referred to fig. 4.

Fig. 4 shows an embodiment of a device for converting an AC input voltage to a DC output voltage. The AC voltage is normally the AC mains. The DC output voltage can be supplied directly to a load or can be supplied to a DC-DC converter for further improving the quality of the DC voltage delivered to a load.

The device arranged for converting an AC input voltage to a DC output voltage comprises a bridgeless boost converter and a protection and stabilisation system.

The protection and stabilisation system comprises:
- a first diode D1, where the anode is connected to a first AC input terminal and the cathode is connected to a positive boost output terminal Obp;
- a second diode D2, where the anode is connected to a negative boost output terminal Obn and the cathode is connected to the first AC input terminal;
- a third diode D3, where the anode is connected to a second AC input terminal and the cathode is connected to the positive boost output terminal Obp; and
- a fourth diode D4, where the anode is connected to the negative boost output terminal Obn and the cathode is connected to the second AC input terminal.

Moreover, the protection and stabilization system comprises at least one capacitor C1-C4 that is connected in parallel with at least one of the protection and stabilization diodes D1-D4. In fig. 4 it is shown that each capacitor D1 - D4 has one capacitor C1 - C4 each. However, it has been shown that only one of the capacitors C2 or C4 in parallel with respective diode D2 or D4 are required to reduce the voltage Vcm considerably. Alternatively, it would be possible to provide both capacitors C2 and C4 in parallel with the diodes D2 and D4.

The anode of the first diode D1 is connected to the first AC input terminal and the cathode of the first diode D1 is connected to the positive boost output terminal Obp.

The anode of the second diode D2 is connected to the negative output boost terminal Obn and the cathode of the second diode D2 is connected to the first AC input terminal.

The anode of the third diode D3 is connected to the second AC input terminal and the cathode of the third diode D3 is connected to the positive boost output terminal Obp.

The anode of the fourth diode D4 are connected to the negative output boost terminal Obn and the cathode of the fourth diode D4 is connected to the second AC input terminal.

The bridgeless boost converter comprises:
- a boost inductor device comprising at least two boost inductors;
- a boost diode device comprising at least two boost diodes;
- a boost switch device comprising at least two boost switches; and
- a boost capacitor device comprising at least one boost capacitor.

The boost diode device comprises a first boost diode Db1 having an anode connected to the first node 1 and a cathode connected to the positive boost output terminal Obp and a second boost diode Db2 having an anode connected to the second node 2 and a cathode connected to the positive boost output terminal Obp.

The boost switch device comprising a first boost switch Sb1 connected between the first node 1 and the negative output boost terminal Obn and a second boost switch Sb2 connected between the second node 2 and the negative output boost terminal Obn.

The boost capacitor device comprises a boost capacitor Cb1 connected between the positive boost output terminal Obp and the negative boost output terminal Obn.

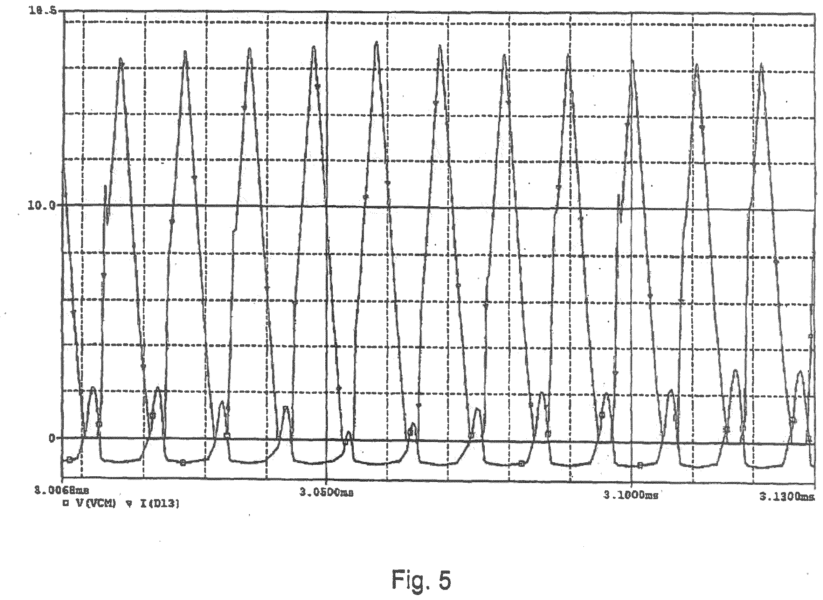

It is now referred to fig. 5, showing a simulation of the voltage Vcm of the device described above with reference to fig. 4. It can be seen that the voltage Vcm varies from approximately -1V to +2V, which is a considerably reduction. It has been found that the device described above solves the problem mentioned in the introduction satisfactorily.

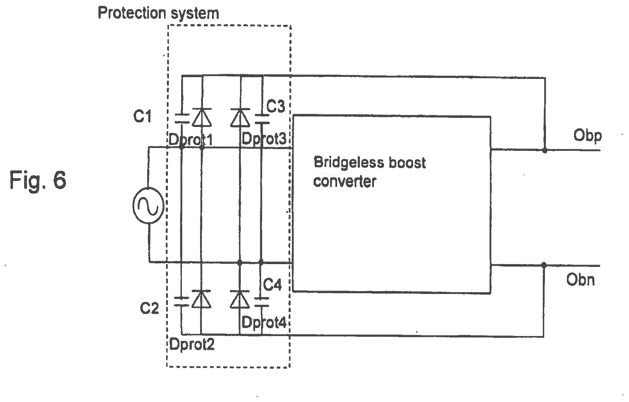

It is now referred to fig. 6, showing the bridgeless boost converter as a box with solid lines. Consequently, it should be noted that the present invention is not limited to the bridgeless boost converter topology shown in fig. 4, but it can be used together with several other bridgeless boost converters for example as shown and described in Huber, L. et al mentioned in the introduction.

In the embodiments above, the switches are of type MOSFET switches. Alternatively, the switches are switches with intrinsic diodes or switches connected in parallel with anti-parallel diodes. Examples of alternative switches are IGBTs connected in parallel with anti-parallel diodes.

The switches are controlled by a control system based on parameters such as measured voltages and/or currents. The method used by the control system for controlling the switches would be known for a man skilled in the art. The control system can be implemented by means of one or several analogue control circuits or digital signal processors.

Further modifications and variations will be obvious for a skilled man when reading the description above. The scope of the invention is solely defined by the following claims.

## Claims

1. Device arranged for converting an AC input voltage to a DC output voltage, comprising:
- a bridgeless boost converter; and
- a protection and stabilisation system comprising:
- a first diode (D2), where the anode is connected to a negative boost output terminal (Obn) and the cathode is connected to the first AC input terminal;
- a second diode (D4), where the anode is connected to the negative boost output terminal (Obn) and the cathode is connected to the second AC input terminal;
- a third diode (D1), where the anode is connected to a first AC input terminal and the cathode is connected to a positive boost output terminal (Obp); and
- a fourth diode (D3), where the anode is connected to a second AC input terminal and the cathode is connected to the positive boost output terminal (Obp);
**characterized in that** the protection and stabilisation system further comprises at least one capacitor connected in parallel with at least one of the protection and stabilization diodes (D1-D4).

2. Device according to claim 1, where the bridgeless boost converter comprises:
- a boost inductor device comprising at least two boost inductors;
- a boost diode device comprising at least two boost diodes;
- a boost switch device comprising at least two boost switches; and
- a boost capacitor device comprising at least one boost capacitor.

3. Device according to claim 1, where the protection and stabilisation system comprises one capacitor (C2) in parallel with the first diode (D2) and one capacitor (C4) in parallel with the second diode (D4).

4. Device according to claim 3, where the protection and stabilisation system comprises one capacitor (C1) in parallel with the third diode (D1) and one capacitor (C3) in parallel with the fourth diode (D3).

5. Device according to any of the claims above, where:
- the boost inductor device comprises a first boost inductor (Lb1) having a first end connected to the first AC input terminal and a second end connected to a first node (1); and a second boost inductor (Lb2) having a first end connected to the second AC input terminal and a second end connected to a second node (2).

6. Device according to any of the claims above, where:
- the boost diode device comprises a first boost diode (Db1) having an anode connected to the first node (1) and a cathode connected to the positive boost output terminal (Obp) and a second boost diode (Db2) having an anode connected to the second node (2) and cathode connected to the positive boost output terminal (Obp).

7. Device according to any of the claims above, where:
- the boost switch device comprises a first boost switch (Sb1) connected between the first node (1) and the negative output boost terminal (Obn) and a second boost switch (Sb2) connected between the second node (2) and the negative output boost terminal (Obn).

8. Device according to any of claims above, where:
- the boost capacitor device comprises a boost capacitor (Cb1) connected between the positive boost output terminal (Obp) and the negative boost output terminal (Obn).

9. Device according to claim 2, where:
- the boost inductor device comprises a first boost inductor (Lb1) having a first end connected to a first AC input terminal and a second end connected to a first node (1) and a second boost inductor (Lb2) having a first end connected to a second AC input terminal and a second end connected to a second node (2);
- the boost diode device comprises a first boost diode (Db1) connected between the first node (1) and the positive boost output terminal (Obp) and a second boost diode (Db2) connected between the second node (2) and the positive boost output terminal (Obp);
- the boost switch device comprises a first boost switch (Sb1) connected between the first node (1) and the negative boost output terminal (Obn) and a second boost switch (Sb2) connected between the second node (2) and the negative boost output terminal (Obn); and
- the boost capacitor device comprises a first boost capacitor (Cb1) connected between the positive boost output terminal (Obp) and negative boost output terminal (Obn).

## Patentansprüche

1. Vorrichtung, die zum Umwandeln einer AC-Eingangsspannung in eine DC-Ausgangsspannung eingerichtet ist, Folgendes umfassend:
- einen brückenlosen Hochsetzwandler; und
- ein Schutz- und Stabilisierungssystem, das Folgendes umfasst:
- eine erste Diode (D2), wobei die Anode an einen negativen Hochsetzausgangsanschluss (Obn) angeschlossen ist, und die Kathode an den ersten AC-Eingangsanschluss angeschlossen ist;
- eine zweite Diode (D4), wobei die Anode an den negativen Hochsetzausgangsanschluss (Obn) angeschlossen ist, und die Kathode an den zweiten AC-Eingangsanschluss angeschlossen ist;
- eine dritte Diode (D1), wobei die Anode an einen ersten AC-Eingangsanschluss angeschlossen ist, und die Kathode an einen positiven Hochsetzausgangsanschluss (Obp) angeschlossen ist; und
- eine vierte Diode (D3), wobei die Anode an einen zweiten AC-Eingangsanschluss angeschlossen ist, und die Kathode an den positiven Hochsetzausgangsanschluss (Opb) angeschlossen ist;
**dadurch gekennzeichnet, dass** das Schutz- und Stabilisierungssystem darüber hinaus umfasst mindestens ein Kondensator mit mindestens einer der Schutz- und Stabilisierungsdioden (D1 - D4) parallelgeschaltet ist.

2. Vorrichtung nach Anspruch 1, wobei der brückenlose Hochsetzwandler umfasst:
- eine Hochsetzinduktorvorrichtung mit mindestens zwei Hochsetzinduktoren;
- eine Hochsetzdiodenvorrichtung mit mindestens zwei Hochsetzdioden;
- eine Hochsetzschaltvorrichtung mit mindestens zwei Hochsetzschaltern; und
- eine Hochsetzkondensatorvorrichtung mit mindestens einem Hochsetzkondensator.

3. Vorrichtung nach Anspruch 1, wobei das Schutz- und Stabilisierungssystem einen mit der ersten Diode (D2) parallelen Kondensator (C2) und einen mit der zweiten Diode (D4) parallelen Kondensator (C4) umfasst.

4. Vorrichtung nach Anspruch 3, wobei das Schutz- und Stabilisierungssystem einen mit der dritten Diode (D1) parallelen Kondensator (C1) und einen mit der vierten Diode (D3) parallelen Kondensator (C3) umfasst.

5. Vorrichtung nach einem der vorhergehenden Ansprüche, wobei:
- die Hochsetzinduktorvorrichtung einen ersten Hochsetzinduktor (Lbl), von dem ein erstes Ende an den ersten AC-Eingangsanschluss und ein zweites Ende an einen ersten Knoten (1) angeschlossen ist, und einen zweiten Hochsetzinduktor (Lb2) umfasst, von dem ein erstes Ende an den zweiten AC-Eingangsanschluss und ein zweites Ende an einen zweiten Knoten (2) angeschlossen ist.

6. Vorrichtung nach einem der vorhergehenden Ansprüche, wobei:
- die Hochsetzdiodenvorrichtung eine erste Hochsetzdiode (Db1) mit einer an den ersten Knoten (1) angeschlossenen Anode und einer an den positiven Hochsetzausgangsanschluss (Obp) angeschlossenen Kathode und eine zweite Hochsetzdiode (Db2) mit einer an den zweiten Knoten (2) angeschlossenen Anode und einer an den positiven Hochsetzausgangsanschluss (Obp) angeschlossenen Kathode umfasst.

7. Vorrichtung nach einem der vorhergehenden Ansprüche, wobei:
- die Hochsetzschaltvorrichtung einen ersten Hochsetzschalter (Sb1), der zwischen dem ersten Knoten (1) und dem negativen Hochsetzausgangsanschluss (Obn) angeschlossen ist, und einen zweiten Hochsetzschalter (Sb2) umfasst, der zwischen dem zweiten Knoten (2) und dem negativen Hochsetzausgangsanschluss (Obn) angeschlossen ist.

8. Vorrichtung nach einem der vorhergehenden Ansprüche, wobei:
- die Hochsetzkondensatorvorrichtung einen Hochsetzkondensator (Cb1) umfasst, der zwischen dem positiven Hochsetzausgangsanschluss (Obp) und dem negativen Hochsetzausgangsanschluss (Obn) angeschlossen ist.

9. Vorrichtung nach Anspruch 2, wobei:
- die Hochsetzinduktorvorrichtung einen ersten Hochsetzinduktor (Lbl), von dem ein erstes Ende an den ersten AC-Eingangsanschluss und ein zweites Ende an einen ersten Knoten (1) angeschlossen ist, und einen zweiten Hochsetzinduktor (Lb2) umfasst, von dem ein erstes Ende an den zweiten AC-Eingangsanschluss und ein zweites Ende an einen zweiten Knoten (2) angeschlossen ist
- die Hochsetzdiodenvorrichtung eine erste Hochsetzdiode (Db1), die zwischen dem ersten Knoten (1) und dem positiven Hochsetzausgangsanschluss (Obp) angeschlossen ist, und eine zweite Hochsetzdiode (Db2) umfasst, die zwischen dem zweiten Knoten (2) und dem positiven Hochsetzausgangsanschluss (Obp) angeschlossen ist;
- die Hochsetzschaltvorrichtung einen ersten Hochsetzschalter (Sb1), der zwischen dem ersten Knoten (1) und dem negativen Hochsetzausgangsanschluss (Obn) angeschlossen ist, und einen zweiten Hochsetzschalter (Sb2) umfasst, der zwischen dem zweiten Knoten (2) und dem negativen Hochsetzausgangsanschluss (Obn) angeschlossen ist; und
- die Hochsetzkondensatorvorrichtung einen ersten Hochsetzkondensator (Cb1) umfasst, der zwischen dem positiven Hochsetzausgangsanschluss (Obp) und dem negativen Hochsetzausgangsanschluss (Obn) angeschlossen ist.

## Revendications

1. Dispositif adapté pour convertir une tension d'entrée alternative en une tension de sortie continue, comprenant :
- un convertisseur élévateur sans pont; et
- un système de protection et de stabilisation comprenant :
- une première diode (D2), où l'anode est reliée à une borne de sortie élévatrice négative (Obn) et la cathode est reliée à la première borne d'entrée alternative ;
- une deuxième diode (D4), où l'anode est reliée à la borne de sortie élévatrice négative (Obn) et la cathode est reliée à la seconde borne d'entrée alternative ;
- une troisième diode (D1), où l'anode est reliée à une première borne d'entrée alternative et la cathode est reliée à une borne de sortie élévatrice positive (Obp) ; et
- une quatrième diode (D3), où l'anode est reliée à une seconde borne d'entrée alternative et la cathode est reliée à la borne de sortie élévatrice positive (Obp) ;
**caractérisé en ce que** le système de protection et de stabilisation comprend, en outre au moins un condensateur connecté en parallèle avec au moins une des diodes de protection et de stabilisation (D1 - D4).

2. Dispositif selon la revendication 1, où le convertisseur élévateur sans pont comprend :
- un dispositif d'inductance élévateur comprenant au moins deux bobines élévatrices de tension ;
- un dispositif élévateur à diodes comprenant au moins deux diodes élévatrices ;
- un dispositif commutateur élévateur comprenant au moins deux commutateurs élévateurs ; et
- un dispositif condensateur élévateur comprenant au moins un condensateur élévateur.

3. Dispositif selon la revendication 1, où le système de protection et de stabilisation comprend un condensateur (C2) en parallèle avec la première diode (D2) et un condensateur (C4) en parallèle avec la deuxième diode (D4).

4. Dispositif selon la revendication 3, où le système de protection et de stabilisation comprend un condensateur (C1) en parallèle avec la troisième diode (D1) et un condensateur (C3) en parallèle avec la quatrième diode (D3).

5. Dispositif selon l'une quelconque des revendications précédentes, où :
- le dispositif d'inductance élévateur comprend une première bobine élévatrice de tension (Lb1) ayant une première extrémité reliée à la première borne d'entrée alternative et une seconde extrémité reliée à un premier nœud (1); et une seconde bobine élévatrice de tension (Lb2) ayant une première extrémité reliée à la seconde borne d'entrée alternative et une seconde extrémité reliée à un second nœud (2).

6. Dispositif selon l'une quelconque des revendications précédentes, où :
- le dispositif élévateur à diodes comprend une première diode élévatrice (Db1) pourvue d'une anode reliée au premier nœud (1) et d'une cathode reliée à la borne de sortie élévatrice positive (Obp) et une seconde diode élévatrice (Db2) pourvue d'une anode reliée au second nœud (2) et d'une cathode reliée à la borne de sortie élévatrice positive (Obp).

7. Dispositif selon l'une quelconque des revendications précédentes, où :
- le dispositif commutateur élévateur comprend un premier commutateur élévateur (Sb1) connecté entre le premier nœud (1) et la borne de sortie élévatrice négative (Obn) et un second commutateur élévateur (Sb2) connecté entre le second nœud (2) et la borne de sortie élévatrice négative (Obn).

8. Dispositif selon l'une quelconque des revendications précédentes, où :
- le dispositif condensateur élévateur comprend un condensateur élévateur (Cb1) connecté entre la borne de sortie élévatrice positive (Obp) et la borne de sortie élévatrice négative (Obn).

9. Dispositif selon la revendication 2, où :
- le dispositif d'inductance élévateur comprend une première bobine élévatrice de tension (Lb1) ayant une première extrémité reliée à une première borne d'entrée alternative et une seconde extrémité reliée à un premier nœud (1) et une seconde bobine élévatrice de tension (Lb2) ayant une première extrémité reliée à une seconde borne d'entrée alternative et une seconde extrémité reliée à un second nœud (2) ;
- le dispositif élévateur à diodes comprend une première diode élévatrice (Db1) connectée entre le premier nœud (1) et la borne de sortie élévatrice positive (Obp) et une seconde diode élévatrice (Db2) connectée entre le second nœud (2) et la borne de sortie élévatrice positive (Obp) ;
- le dispositif commutateur élévateur comprend un premier commutateur élévateur (Sb1) connecté entre le premier nœud (1) et la borne de sortie élévatrice négative (Obn) et un second commutateur élévateur (Sb2) connecté entre le second nœud (2) et la borne de sortie élévatrice négative (Obn) ; et
- le dispositif condensateur élévateur comprend un premier condensateur élévateur (Cb1) connecté entre la borne de sortie élévatrice positive (Obp) et la borne de sortie élévatrice négative (Obn).
